# FASCICULE DE BREVET EUROPEEN

(11) **EP 3 288 777 B1**
(45) Date de publication et mention de la délivrance du brevet: **04.03.2020**
(21) Numéro de dépôt: 15724338.7
(22) Date de dépôt: 27.04.2015
(51) Int. Cl.: B60C 1/00, C08L 77/00

(54) **COMPOSITION ELASTOMERE POUR INSERT DE SOUTIEN D'UN BANDAGE DE ROUE, INSERT COMPRENANT LA COMPOSITION ET ENSEMBLE MONTE INCORPORANT L'INSERT**
ELASTOMERZUSAMMENSETZUNG FÜR STÜTZEINSATZ EINES LAUFREIFENS, EINSATZ ENTHALTEND DIE ZUSAMMENSETZUNG UND MONTIERTE ANORDNUNG ENTHALTEND DEN EINSATZ
ELASTOMER COMPOSITION USEFUL FOR SUPPORT INSERT FOR PNEUMATIC TIRE, INSERT COMPRISING THE COMPOSITION AND MOUNTED ASSEMBLY CONTAINING THE INSERT

(43) Date de publication de la demande: 07.03.2018
(73) Titulaire: Hutchinson, 75008 Paris (FR)
(72) Inventeur: DELAUNAY, Hélène, 45700 Villemandeur (FR); GAROIS, Nicolas, 45200 Amilly (FR); GANGLOFF, Norbert, 45270 Ladon (FR); NICOLLE, Paul, H1N 3B4 Montréal (CA); CARNIOL, Natacha, 45200 Amilly (FR)
(74) Mandataire: Plasseraud IP
(86) Numéro de dépôt international: PCT/FR2015/051136
(87) Numéro de publication internationale: WO 2016/174314

(56) Documents cités:
- US-A1- 2005 148 727

## Description

La présente invention concerne une composition élastomère pour insert autoporteur destiné à soutenir un bandage d'une roue d'un véhicule, un insert dont au moins une couche comprend cette composition et un ensemble monté incorporant cet insert. L'invention s'applique à un ensemble monté non pneumatique (i.e. sans pression de gonflage) notamment mais pas uniquement pour un véhicule à deux roues, dont chacun des bandages est soutenu en permanence par cet insert.

De manière connue, les ensembles montés pour véhicules à deux roues peuvent incorporer des moyens de mise sous pression de leur espace interne, que ce soit via des chambres à air prévues entre le bandage pneumatique et la jante de roue (un tel ensemble monté est alors appelé "tubetype") ou bien sans chambre à air via le montage étanche du bandage pneumatique contre les rebords de jante (ensemble monté " tubeless ").

Un inconvénient de ces ensembles montés pneumatiques (i.e. sous pression interne) réside non seulement dans le gonflage régulier qu'ils requièrent pour pallier la fuite progressive du gaz de gonflage, mais encore dans le fait qu'ils peuvent être perforés par exemple par crevaison ou par vandalisme ce qui entraîne usuellement l'immobilisation du véhicule pour sa réparation.

Il est également connu d'utiliser des bandages non pneumatiques qui forment une bande de roulement pour l'ensemble monté d'un véhicule à deux roues et qui sont soutenus sans gaz de gonflage par un insert élastomère autoporteur compact ou cellulaire remplissant l'espace entre le bandage et la jante.

On peut par exemple citer le document WO-A1-2007/015279 pour la description d'un tel ensemble monté non pneumatique, dans lequel l'insert est à base d'un ou plusieurs élastomères thermoplastiques comprenant exclusivement ou majoritairement en masse un polyuréthanne thermoplastique (TPU) et optionnellement un élastomère thermoplastique styrénique (TPS) à titre très minoritaire en masse par rapport au TPU.

Un inconvénient majeur de cet ensemble monté à insert de soutien à base d'un TPU réside dans son endurance relativement réduite et dans sa résistance au roulement relativement élevée.

On peut aussi citer le document FR-B1-2 963 353 au nom de la Demanderesse qui a remédié à cet inconvénient en proposant un insert de soutien par exemple pour bandage non pneumatique, l'insert étant de type celullaire à cellules fermées. L'insert présenté dans ce document comprenait également majoritairement en masse un TPU mais en outre un autre élastomère thermoplastique pouvant être un copolyamide (COPA) et/ou un copolyester (COPE) et interagissant favorablement avec le TPU.

Au cours de ses recherches intensives récentes, la Demanderesse a cherché à améliorer encore les propriétés dynamiques des inserts élastomères pour bandages non pneumatiques, un but de la présente invention étant ainsi de proposer une composition élastomère de type compact ou cellulaire à cellules fermées pour insert destiné à soutenir en permanence un bandage non pneumatique d'une roue de véhicule, qui permette notamment d'optimiser la résilience de l'insert incorporant cette composition en l'adaptant aux sollicitations dynamiques en roulage.

Ce but est atteint en ce que la Demanderesse vient de découvrir d'une manière surprenante que la sélection d'au moins un COPA spécifiquement combiné à au moins un TPS permet d'obtenir un mélange élastomère thermoplastique servant de base à une composition d'insert autoporteur pour bandage non pneumatique qui présente notamment une résilience améliorée en comparaison de celle des inserts précités de l'art antérieur à base d'un TPU, cette résilience conférant aux inserts de l'invention un comportement dynamique progressif à partir du démarrage et adapté aux sollicitations en roulage, sans pénaliser leur endurance et leur résistance au roulement.

En d'autres termes, une composition élastomère selon l'invention pour insert de soutien autoporteur d'un bandage non pneumatique d'une roue est telle que la composition, qui peut être de type compacte ou bien cellulaire à cellules fermées, comprend majoritairement en masse un mélange d'au moins un premier élastomère thermoplastique et d'au moins un second élastomère thermoplastique, et la composition est caractérisée en ce que ledit au moins un premier élastomère thermoplastique est un COPA et ledit au moins un second élastomère thermoplastique est un TPS.

Par « autoporteur », on entend de manière connue un insert apte à supporter en permanence sans autre moyen (e.g. sans gaz de gonflage, ni tube interne) le bandage non pneumatique.

On notera que la présente invention témoigne d'un effet de synergie inattendu entre élastomères thermoplastiques COPA et TPS, qui permet d'améliorer la résilience de la composition à base de ces élastomères et de procurer un effet de ressort progressif lors des sollicitations en roulage.

On notera également que ce mélange de COPA et de TPS qui caractérise les compositions selon l'invention présente l'avantage de conférer un poids relativement réduit aux inserts correspondants (du fait de la faible densité moyenne des élastomères thermoplastiques utilisés) et également de minimiser le fluage de ces compositions une fois transformées.

On notera en outre que cet alliage thermoplastique COPA/TPS présente l'avantage de rendre les inserts de l'invention entièrement recyclables et aisément transformables pour leur mise en oeuvre (aucune réticulation n'étant requise).

Avantageusement, ledit mélange peut comprendre ledit au moins un premier élastomère thermoplastique selon une fraction massique inférieure ou égale à celle dudit au moins un second élastomère thermoplastique dans ledit mélange.

Encore plus avantageusement, ladite composition peut être dépourvue de polyuréthanne thermoplastique (TPU), les fractions massiques dans ledit mélange dudit au moins un premier élastomère thermoplastique et dudit au moins un second élastomère thermoplastique pouvant être respectivement comprises entre 5 et 49 % et entre 95 et 51 %.

De préférence, ledit au moins un second élastomère thermoplastique comprend un dit TPS de type linéaire à blocs et un dit TPS de type à blocs greffé par un agent compatibilisant.

A titre encore plus préférentiel, ledit TPS linéaire et ledit TPS greffé sont respectivement présents dans ledit au moins un second élastomère thermoplastique selon des fractions massiques comprises entre 40 et 60 % et 60 et 40 %, et sont chacun indépendamment choisis dans le groupe constitué par les copolymères à blocs styrène-butadiène-styrène (SBS), styrène-isoprène-styrène (SIS), styrène-butylène-éthylène-styrène (SEBS) et styrène-éthylène-propylène-styrène (SEPS).

Encore plus préférentiellement, ledit TPS linéaire est un SEBS et ledit TPS greffé est un SEBS greffé anhydride maléique constituant ledit agent compatibilisant (par exemple avec un taux massique d'anhydride maléique greffé compris entre 1 et 2 %).

Avantageusement, ladite composition peut comprendre :
- selon une fraction massique comprise entre 3 et 40 %, ledit au moins un premier élastomère thermoplastique qui comprend au moins un polyéther bloc amide (PEBA, e.g. de dénomination "Pebax" ou "Vestamid" et de dureté Shore A par exemple comprise entre 60 et 90),
- selon une fraction massique comprise entre 65 et 40 % ledit au moins un second élastomère thermoplastique qui comprend de préférence un dit TPS de type linéaire à haut poids moléculaire et un dit TPS de type greffé par un agent compatibilisant (e.g. deux SEBS respectivement linéaire et greffé présentant chacun un taux massique de styrène lié compris entre 30 et 35 % et une dureté Shore A comprise entre 60 et 80), et
- selon une fraction massique comprise entre 20 et 32 %, un plastifiant de préférence paraffinique, qui permet de faciliter le mélangeage et la mise en œuvre de ladite composition.

Selon un autre aspect de l'invention, ladite composition peut avantageusement présenter une résilience de rebondissement, mesurée suivant la norme ISO 4662:2009, qui est égale ou supérieure à 70 %, par exemple égale à 75 %.

Selon un premier exemple de réalisation de l'invention, ladite composition est compacte, étant dépourvue d'agent d'expansion.

Selon un second exemple de réalisation de l'invention, ladite composition est cellulaire à cellules fermées, comprenant un agent d'expansion selon une fraction massique comprise entre 1 et 20 % de préférence sous forme de microsphères thermoplastiques renfermant un gaz gonflant formant ledit agent d'expansion.

On notera que l'expansion peut en variante être réalisée en injectant un gaz adapté (e.g. de l'azote ou du dioxyde de carbone) dans le dispositif utilisé pour l'obtention de l'insert.

On notera également que la structure cellulaire obtenue pour l'insert permet de lui conférer une raideur et une masse relativement réduites en comparaison de celles obtenues par des matériaux élastomères compacts.

D'une manière générale en référence à l'ensemble des exemples précités de réalisation de l'invention, ladite composition peut optionnellement contenir, outre l'alliage thermoplastique COPA/TPS et ledit plastifiant, tout ou partie des autres additifs habituellement utilisés dans les mélanges élastomères thermoplastiques, comme par exemple des charges renforçantes organiques (e.g. des noirs de carbone) ou inorganiques (e.g. de la craie ou du kaolin) et/ou des fibres (e.g. des fibres textiles de renforcement par exemple à base d'un polyamide). Ces charges peuvent en effet permettre d'améliorer, d'une part, la portance (ou résistance à la charge en roulage) de l'insert et, d'autre part, sa résistance à la rupture.

Un insert de soutien autoporteur selon l'invention d'un bandage non pneumatique d'une roue d'un véhicule, l'insert présentant une longueur circonférentielle et une épaisseur radiale le rendant apte à être monté entre la roue et le bandage en soutenant ce dernier en permanence, l'insert comprenant sur sa longueur au moins une première couche d'épaisseur radiale supérieure à 2 mm, est tel que ladite au moins une première couche est constituée de ladite composition définie ci-dessus.

On notera qu'un insert selon l'invention peut être obtenu indifféremment par extrusion ou par bi-injection.

Avantageusement, l'insert peut présenter une section transversale sensiblement circulaire délimitée radialement à l'extérieur par une seconde couche externe d'épaisseur radiale comprise entre 100 µm et 1 mm et constituée d'une composition élastomère réticulée.

On notera que cette couche externe réticulée ne doit pas être confondue avec un film (qui par définition présente une épaisseur de moins de 100 µm) et contribue à l'obtention du caractère autoporteur de l'insert.

Encore plus avantageusement, cette composition élastomère réticulée peut comprendre majoritairement en masse au moins un troisième élastomère thermoplastique choisi parmi les vulcanisats thermoplastiques (TPV, par exemple tels que les élastomères réticulés à transformation thermoplastique décrits aux exemples 1 à 4 du Brevet EP-B1-0 840 763 au nom de la Demanderesse qui comprennent au moins un élastomère à polymérisation par un catalyseur métallocène et une polyoléfine greffée, étant précisé que d'autres TPV sont également utilisables), les copolyesters (COPE) réticulés et leurs mélanges, cette composition réticulée comprenant de préférence en outre une résine thermodurcissable telle qu'une résine époxy dispersée dans ledit au moins un troisième élastomère thermoplastique notamment dans le cas où ce dernier comprend un ou des COPE.

Selon un premier mode de réalisation de l'invention, l'insert est creux sur ladite longueur et présente une géométrie tubulaire comprenant une dite première couche qui est radialement la plus interne ou non pour l'insert et qui est de préférence compacte, et ladite seconde couche externe.

On notera que cette première couche, si elle est la plus interne pour l'insert, peut avantageusement présenter une épaisseur radiale comprise entre 5 mm et 15 mm et de préférence entre 6 et 10 mm, e.g. pour un bandage de bicyclette.

Selon un second mode de réalisation de l'invention, l'insert est plein sur ladite longueur et présente un cœur cellulaire à cellules fermées, une dite première couche intermédiaire de préférence compacte entourant ledit cœur, et ladite seconde couche externe.

Cette première couche intermédiaire peut présenter une épaisseur radiale comprise entre 2 mm et 5 mm, e.g. pour une bicyclette.

Un ensemble monté non pneumatique selon l'invention pour un véhicule à roues en particulier choisi parmi les bicyclettes, les motocyclettes, les engins de manutention, les chaises roulantes d'invalides et les déambulateurs, l'ensemble monté comportant une roue, un bandage non pneumatique monté sur la roue qui comprend une bande de roulement et deux talons montés contre deux rebords de la roue, et un insert de soutien autoporteur du bandage monté entre la roue et le bandage en soutenant ce dernier en permanence, est caractérisé en ce que l'insert est tel que défini ci-dessus.

Cet ensemble monté selon l'invention présente notamment les avantages suivants, en plus de ceux cités plus haut :
- une protection efficace contre les risques de perforation du bandage, choc-pincement en roulage ou vandalisme,
- des qualités de confort, de tenue de route et de durée de vie satisfaisantes pour l'utilisateur, et
- un montage très simple de l'insert à l'intérieur du bandage, sans outillage particulier autre que les "démonte-pneus " adaptés.

D'autres caractéristiques, avantages et détails de la présente invention ressortiront à la lecture de la description suivante de plusieurs exemples de réalisation de l'invention donnés à titre illustratif et non limitatif, la description étant réalisée en référence avec les dessins joints, parmi lesquels:
la figure 1 est une vue en section transversale d'un insert tubulaire selon ledit premier mode de l'invention,
la figure 2 est une vue en section transversale d'un insert plein selon ledit second mode de l'invention, et
la figure 3 est une vue en section transversale d'un insert tubulaire selon ledit premier mode de l'invention, conformément à une variante de la figure 1.

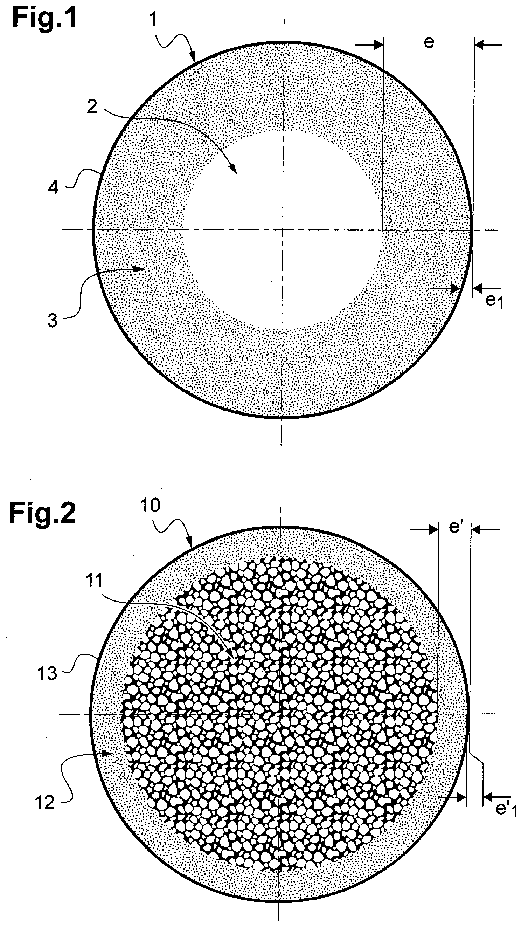

Les inserts 1, 10 et 10' des figures 1, 2 et 3 sont destinés à être disposés entre une jante de roue et un bandage non pneumatique (non illustrés) de manière à former un ensemble monté sans gaz de gonflage par exemple pour un véhicule à deux roues tel qu'une bicyclette, étant précisé que ces inserts 1, 10 et 10' peuvent être utilisés suivant des formes et/ou dimensions différentes pour équiper des ensembles montés non pneumatiques d'autres véhicules tels que ceux précités, à titre non limitatif.

L'insert tubulaire 1 de la figure 1 est ainsi destiné à délimiter un espace interne 2 non gonflé, et il est formé :
- d'une couche interne 3 compacte qui présente une section transversale annulaire et qui est constituée d'une composition élastomère thermoplastique compacte selon l'invention, i.e. dont la matrice élastomère est à base d'un mélange comprenant au moins un COPA et au moins un TPS, et
- d'une couche externe 4 ou « peau » compacte recouvrant la couche interne 3 sur toute sa circonférence et sa longueur et qui est constituée d'une composition élastomère thermoplastique réticulée selon l'invention, i.e. dont la matrice élastomère est à base d'au moins un TPV et/ou d'au moins un COPE réticulé.

Dans l'exemple de la figure 1 montrant un insert 1 au repos pour roue de bicyclette (agrandissement d'environ x 3), la couche interne 3 présente une épaisseur de 7,5 mm et la couche externe 4 une épaisseur e₁ de 0,5 mm (d'où une épaisseur e de 8 mm pour les couches 3 et 4), avec des diamètres interne et externe de l'insert 1 respectivement de 17,5 et 33,5 mm.

L'insert plein 10 de type jonc de la figure 2 est formé :
- d'un cœur expansé 11 de type cellulaire à cellules fermées qui constitue la majeure partie en volume de l'insert 10 et qui est par exemple constitué d'une composition élastomère thermoplastique cellulaire selon l'invention, i.e. à base d'au moins un COPA et d'au moins un TPS,
- d'une couche intermédiaire 12 compacte qui recouvre le cœur expansé 11 sur toute sa circonférence et sa longueur et qui est constituée d'une composition élastomère thermoplastique compacte selon l'invention à base d'au moins un COPA et d'au moins un TPS, et
- d'une couche externe 13 compacte analogue à celle de la figure 1 qui est constituée d'une composition élastomère thermoplastique réticulée à base d'au moins un TPV et/ou d'au moins un COPE réticulé.

Dans l'exemple de la figure 2 qui illustre un insert 10 au repos pour roue de bicyclette (agrandissement d'environ x 3), la couche intermédiaire 12 a une épaisseur de 2,5 mm et la couche externe 13 une épaisseur e'₁ de 0,5 mm (d'où une épaisseur e' de 3 mm pour les couches 12 et 13), avec un diamètre externe de l'insert 10 de 33,5 mm.

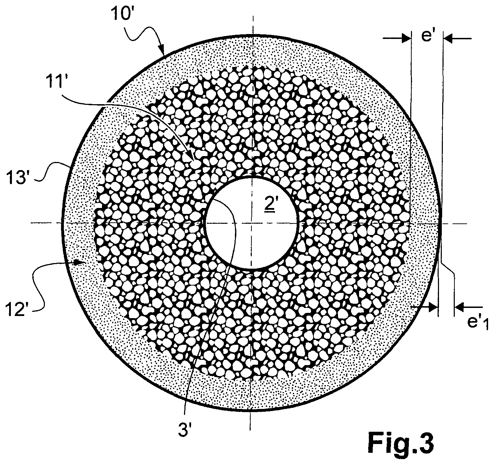

L'insert tubulaire 10' de la figure 3 est formé :
- d'une couche interne 3' ou « peau » compacte qui délimite extérieurement un espace interne 2' non gonflé en présentant une section transversale annulaire et qui est constituée d'une composition élastomère thermoplastique réticulée à base d'au moins un TPV et/ou d'au moins un COPE réticulé,
- d'un cœur tubulaire expansé 11' de type cellulaire à cellules fermées qui constitue la majeure partie en volume de l'insert 10' et qui est par exemple constitué d'une composition élastomère thermoplastique cellulaire selon l'invention, i.e. à base d'au moins un COPA et d'au moins un TPS,
- d'une couche intermédiaire 12' compacte qui recouvre le coeur expansé 11' sur toute sa circonférence et sa longueur et qui est constituée d'une composition élastomère thermoplastique compacte selon l'invention à base d'au moins un COPA et d'au moins un TPS, et
- d'une couche externe 13' compacte ou « peau » analogue à la couche interne 3' qui est constituée d'une composition élastomère thermoplastique réticulée à base d'au moins un TPV et/ou d'au moins un COPE réticulé.

Dans l'exemple de la figure 3 montrant un insert 10' au repos pour roue de bicyclette, les couches interne 3' et externe 13' présentent chacune une même épaisseur e'₁ de 0,50 mm (avec une épaisseur totale e' de 3 mm pour les couches 12' et 13' comme pour l'insert 10 de la figure 2), l'insert 10' présentant un diamètre externe de 33,5 mm.

On a obtenu chacune des compositions élastomères formant les couches 3, 4, 11, 12, 13 et 3', 11', 12', 13' essentiellement en deux étapes:
- une première étape de travail thermo-mécanique de chaque composition, éventuellement avec ajout d'un agent d'expansion de préférence sous forme de microsphères thermoplastiques renfermant un gaz gonflant, et
- une seconde étape de façonnage par extrusion (mise en oeuvre dans une ligne d'extrusion usuelle comprenant des postes d'extrusion, de refroidissement et de coupe) ou par bi-injection dans un moule.

On a enfin inséré l'insert autoporteur 1, 10, 10' extrudé ou bi-injecté à l'intérieur du bandage non pneumatique monté sur la roue.

### Exemples de compositions utilisables pour des inserts selon l'invention :

### 1) Compositions de couche interne ou intermédiaire :

On a préparé comme indiqué ci-dessus deux compositions élastomères thermoplastiques compactes l1 et l2 utilisables pour la couche interne 3 de l'insert 1, la couche intermédiaire 12 de l'insert 10 et la couche intermédiaire 12' de l'insert 10', toutes deux à base d'un COPA de type PEBA et d'un alliage de deux TPS de type SEBS (les formulations ci-dessous sont exprimées en parties en poids), et l'on a mesuré les résiliences de rebondissement obtenues pour I1 et I2 suivant la norme ISO 4662:2009.

**Composition I1 :**

| | |
|---|---|
| PEBA Pebax 4033 | 10 parties |
| SEBS Kraton G1651 | 50 parties |
| SEBS greffé MAH Kraton FG1901 | 50 parties |
| Plastifiant paraffinique Torilis 7200 | 50 parties |
| | |
| Résilience obtenue **75 %.** | |

On notera que la résilience obtenue pour cette composition I1 comprenant des TPS et un COPA selon des fractions massiques respectives de 63 % et 6 % est très élevée, ce qui permet avantageusement de conférer à un insert 1, 10, 10' selon l'invention l'incorporant un comportement dynamique progressif à partir du démarrage et adapté aux sollicitations en roulage.

**Composition I2 :**

| | |
|---|---|
| PEBA Pebax 4033 | 75 parties |
| SEBS Kraton G1651 | 50 parties |
| SEBS greffé MAH Kraton FG1901 | 50 parties |
| Plastifiant Torilis 7200 | 50 parties |
| | |
| Résilience obtenue **70 %.** | |

On notera que la résilience élevée obtenue pour cette composition I2 comprenant des TPS et un COPA selon des fractions massiques respectives de 44 % et 33 % permet également de conférer à un insert 1, 10, 10' selon l'invention l'incorporant ce comportement dynamique résilient progressif et adapté aux sollicitations en roulage.

### 2) Compositions de couche externe:

On a préparé comme indiqué ci-dessus deux compositions élastomères thermoplastiques réticulées I3 et I4 utilisables pour les couches externe 4 et 13 des inserts 1 et 10 et pour les couches interne 3' et externe 13' de l'insert 10', respectivement à base d'un TPV de type EPDM-PP (de type « Vegaprene® ») pour la composition I3 et à base d'un alliage de deux COPE renforcé par une résine thermodurcissable pour la composition I4 (les formulations ci-dessous sont également exprimées en parties en poids).

**Composition I3 :**

| | |
|---|---|
| EPDM VISTALON 3666 | 91,4 parties |
| Polypropylene : Finapro PPH 3060 | 170 parties |
| Activateur : acide stéarique | 0,5 partie |
| Activateur : ZnO actif | 3 parties |
| Agent de mise en œuvre : PEG 4000 | 5 parties |
| Agent de mise en œuvre : Polyplastol | 1 partie |
| Agent de mise en œuvre : Crodamide E | 1 partie |
| Résine phénolique : résine SP 1055 | 6 parties |
| Noir de carbone FEF 550 | 22 parties |
| Plastifiant Torilis 7200 | 24,8 parties |

**Composition I4 :**

| | |
|---|---|
| COPE : Arnitel PM460 | 100 parties |
| Résine époxy : DER330 | 5 parties |
| Agent réticulant : Jeffamine T403 | 2 parties |

Les essais de roulage réalisés par la Demanderesse sur la base de ces compositions ont montré que ces compositions I3, I4 de couches internes 4, 13, 3', 13' selon l'invention contribuent de manière significative à rendre l'insert 1, 10, 10' autoporteur en roulage.

D'une manière générale, on notera que ces formulations I1, I2 de couches internes ou intermédiaires et I3, I4 de couches externes d'inserts selon l'invention sont données à titre exemplatif et non limitatif, et qu'il est notamment possible d'utiliser des COPA autres que les PEBA testés pour ces couches internes et intermédiaires, et/ou des TPV ou des COPE autres que ceux testés pour ces couches externes.

## Revendications

1. Composition élastomère pour insert de soutien (1, 10, 10') autoporteur d'un bandage non pneumatique d'une roue d'un véhicule, la composition comprenant majoritairement en masse un mélange d'au moins un premier élastomère thermoplastique et d'au moins un second élastomère thermoplastique, **caractérisée en ce que** ledit au moins un premier élastomère thermoplastique est un copolyamide (COPA) et ledit au moins un second élastomère thermoplastique est un élastomère thermoplastique styrénique (TPS), et **en ce que** la composition n'est pas réticulée.

2. Composition selon la revendication 1, **caractérisée en ce que** ledit mélange comprend ledit au moins un premier élastomère thermoplastique selon une fraction massique inférieure ou égale à celle dudit au moins un second élastomère thermoplastique dans ledit mélange.

3. Composition selon la revendication 2, **caractérisée en ce que** la composition est dépourvue de polyuréthanne thermoplastique (TPU), les fractions massiques dans ledit mélange dudit au moins un premier élastomère thermoplastique et dudit au moins un second élastomère thermoplastique étant respectivement comprises entre 5 et 49 % et entre 95 et 51 %.

4. Composition selon une des revendications précédentes, **caractérisée en ce que** ledit au moins un second élastomère thermoplastique comprend un dit TPS de type linéaire à blocs et un dit TPS de type à blocs greffé par un agent compatibilisant.

5. Composition selon la revendication 4, **caractérisée en ce que** ledit TPS linéaire et ledit TPS greffé sont respectivement présents dans ledit au moins un second élastomère thermoplastique selon des fractions massiques comprises entre 40 et 60 % et 60 et 40 %, et sont chacun indépendamment choisis dans le groupe constitué par les copolymères à blocs styrène-butadiène-styrène (SBS), styrène-isoprène-styrène (SIS), styrène-butylène-éthylène-styrène (SEBS) et styrène-éthylène-propylène-styrène (SEPS).

6. Composition selon la revendication 5, **caractérisée en ce que** ledit TPS linéaire est un SEBS et ledit TPS greffé est un SEBS greffé anhydride maléique constituant ledit agent compatibilisant.

7. Composition selon une des revendications précédentes, **caractérisée en ce que** la composition comprend :
- selon une fraction massique comprise entre 3 et 40 %, ledit au moins un premier élastomère thermoplastique qui comprend au moins un polyéther bloc amide (PEBA),
- selon une fraction massique comprise entre 65 et 40 % ledit au moins un second élastomère thermoplastique qui comprend de préférence un dit TPS de type linéaire et un dit TPS de type greffé par un agent compatibilisant, et
- selon une fraction massique comprise entre 20 et 32 %, un plastifiant de préférence paraffinique.

8. Composition selon une des revendications précédentes, **caractérisée en ce que** la composition présente une résilience de rebondissement, mesurée suivant la norme ISO 4662:2009, qui est égale ou supérieure à 70 %, par exemple égale à 75 %.

9. Composition selon une des revendications 1 à 8, **caractérisée en ce que** la composition est compacte, étant dépourvue d'agent d'expansion.

10. Composition selon une des revendications 1 à 8, **caractérisée en ce que** la composition est cellulaire à cellules fermées, comprenant un agent d'expansion selon une fraction massique comprise entre 1 et 20 % de préférence sous forme de microsphères thermoplastiques renfermant un gaz gonflant formant ledit agent d'expansion.

11. Insert de soutien (1, 10, 10') autoporteur d'un bandage non pneumatique d'une roue d'un véhicule, l'insert présentant une longueur circonférentielle et une épaisseur radiale (e) le rendant apte à être monté entre ladite roue et ledit bandage en soutenant ce dernier en permanence, l'insert comprenant sur ladite longueur au moins une première couche (3, 12, 12') d'épaisseur radiale supérieure à 2 mm, **caractérisé en ce que** ladite au moins une première couche est constituée d'une composition selon une des revendications précédentes.

12. Insert (1, 10, 10') selon la revendication 11, **caractérisé en ce que** l'insert présente une section transversale sensiblement circulaire délimitée radialement à l'extérieur par une seconde couche externe (4, 13, 13') d'épaisseur radiale (e₁, e'₁) comprise entre 100 µm et 1 mm et constituée d'une composition élastomère réticulée.

13. Insert (1, 10, 10') selon la revendication 12, **caractérisé en ce que** ladite composition élastomère réticulée comprend majoritairement en masse au moins un troisième élastomère thermoplastique choisi parmi les vulcanisats thermoplastiques (TPV), les copolyesters (COPE) réticulés et leurs mélanges, ladite composition élastomère réticulée comprenant de préférence en outre une résine thermodurcissable telle qu'une résine époxy dispersée dans ledit au moins un troisième élastomère thermoplastique notamment dans le cas où ce dernier comprend un ou des COPE.

14. Insert (1, 10') selon la revendication 12 ou 13, **caractérisé en ce que** l'insert est creux sur ladite longueur et présente une géométrie tubulaire comprenant une dite première couche (3, 12') qui est de préférence compacte, et ladite seconde couche externe (4, 13').

15. Insert (10) selon la revendication 12 ou 13, **caractérisé en ce que** l'insert est plein sur ladite longueur et présente un cœur cellulaire (11) à cellules fermées, une dite première couche intermédiaire (12) de préférence compacte entourant ledit cœur, et ladite seconde couche externe (13).

16. Ensemble monté non pneumatique pour un véhicule à roues, en particulier choisi parmi les bicyclettes, les motocyclettes, les engins de manutention, les chaises roulantes d'invalides et les déambulateurs, l'ensemble monté comportant une roue, un bandage non pneumatique monté sur la roue qui comprend une bande de roulement et deux talons montés contre deux rebords de la roue, et un insert de soutien (1, 10, 10') autoporteur du bandage qui est monté entre la roue et le bandage en soutenant ce dernier en permanence, **caractérisé en ce que** ledit insert est tel que défini à l'une des revendications 11 à 15.

## Patentansprüche

1. Elastomerzusammensetzung für einen selbsttragenden Stützeinsatz (1, 10, 10') eines nichtpneumatischen Reifens eines Fahrzeugrades, wobei die Zusammensetzung mehrheitlich als Masse eine Mischung aus wenigstens einem ersten thermoplastischen Elastomer und wenigstens einem zweiten thermoplastischen Elastomer umfasst, **dadurch gekennzeichnet, dass** das wenigstens eine erste thermoplastische Elastomer ein Copolyamid (COPA) ist und dass das wenigstens eine zweite thermoplastische Elastomer ein styrolisches thermoplastisches Elastomer (TPS) ist, und dass die Zusammensetzung nicht vernetzt ist.

2. Zusammensetzung nach Anspruch 1, **dadurch gekennzeichnet, dass** die Mischung das wenigstens eine erste thermoplastische Elastomer mit einem Massenanteil umfasst, der kleiner als oder gleich dem Massenanteil des wenigstens einen zweiten thermoplastischen Elastomers in der Mischung ist.

3. Zusammensetzung nach Anspruch 2, **dadurch gekennzeichnet, dass** die Zusammensetzung frei von thermoplastischem Polyurethan (TPU) ist, wobei die Massenanteile in der Mischung aus dem wenigstens einen ersten thermoplastischen Elastomer und dem wenigstens einen zweiten thermoplastischen Elastomer jeweils zwischen 5 und 49% und zwischen 95 und 51 % liegen.

4. Zusammensetzung nach einem der vorhergehenden Ansprüche, **dadurch gekennzeichnet, dass** das wenigstens eine zweite thermoplastische Elastomer ein genannte TPS vom linearen Blocktyp und ein mit einem Kompatibilisierungsmittel gepfropftes genannte TPS vom Blocktyp umfasst.

5. Zusammensetzung nach Anspruch 4, **dadurch gekennzeichnet, dass** das lineare TPS und das gepfropfte TPS jeweils in dem wenigstens einen zweiten thermoplastischen Elastomer mit Massenanteilen zwischen 40 und 60 % und 60 und 40 % vorliegen und jeweils unabhängig voneinander gewählt sind aus der Gruppe, umfassend StyrolButadien-Styrol Blockcopolymere (SBS), Styrol-Isopren-Styrol Blockcopolymere (SIS), Styrol-Butylen-Ethylen-Styrol Blockcopolymere (SEBS) und Styrol-Ethylen-Propylen-Styrol Blockcopolymere (SEPS).

6. Zusammensetzung nach Anspruch 5, **dadurch gekennzeichnet, dass** das lineare TPS ein SEBS ist und das gepfropfte TPS ein mit dem das Kompatibilisierungsmittel bildenden Maleinsäureanhydrid gepfropftes SEBS ist.

7. Zusammensetzung nach einem der vorhergehenden Ansprüche, **dadurch gekennzeichnet, dass** die Zusammensetzung umfasst:
- mit einem Massenanteil zwischen 3 und 40 % das wenigstens eine erste thermoplastische Elastomer, welches wenigstens ein Polyetherblockamid (PEBA) umfasst,
- mit einem Massenanteil zwischen 65 und 40 % das wenigstens eine zweite thermoplastische Elastomer, welches bevorzugt ein genannte TPS vom linearen Typ und ein genannte TPS vom mit einem Kompatilisierungsmittel gepfropften Typ umfasst, und
- mit einem Massenanteil zwischen 20 und 32 % einen Weichmacher, bevorzugt einen paraffinischen Weichmacher.

8. Zusammensetzung nach einem der vorhergehenden Ansprüche, **dadurch gekennzeichnet, dass** die Zusammensetzung eine nach ISO 4662:2009 gemessene Rückprallelastizität aufweist, die gleich oder größer 70 %, beispielsweise gleich 75 % ist.

9. Zusammensetzung nach einem der Ansprüche 1 bis 8, **dadurch gekennzeichnet, dass** die Zusammensetzung kompakt und frei von Treibmittel ist.

10. Zusammensetzung nach einem der Ansprüche 1 bis 8, **dadurch gekennzeichnet, dass** die Zusammensetzung eine Zellstruktur mit geschlossenen Zellen aufweist und ein Treibmittel mit einem Massenanteil zwischen 1 und 20 %, bevorzugt in Form von thermoplastischen Mikrokugeln, die ein Treibgas enthalten, das das Treibmittel bildet.

11. Selbsttragender Stützeinsatz (1, 10, 10') eines nichtpneumatischen Reifens eines Fahrzeugrades, wobei der Einsatz eine Umfangslänge und eine radiale Dicke (e) aufweist, die ihn zur Montage zwischen dem Rad und dem Reifen mit permanenter Stützung des Letzteren geeignet machen, wobei der Einsatz über diese Länge wenigstens eine erste Schicht (3, 12, 12') mit einer radialen Dicke größer 2 mm umfasst, **dadurch gekennzeichnet, dass** die wenigstens eine erste Schicht eine Zusammensetzung nach einem der vorhergehenden Ansprüche umfasst.

12. Einsatz (1, 10, 10') nach Anspruch 11, **dadurch gekennzeichnet, dass** der Einsatz einen im Wesentlichen kreisförmigen Querschnitt aufweist, welcher radial außen durch eine zweite Außenschicht (4, 13, 13') mit einer radialen Dicke (e₁, e'₁) zwischen 100 µm und 1 mm begrenzt ist und aus einer vernetzten Elastomerzusammensetzung besteht.

13. Einsatz (1, 10, 10') nach Anspruch 12, **dadurch gekennzeichnet, dass** die vernetzte Elastomerzusammensetzung als Masse mehrheitlich wenigstens ein drittes thermoplastisches Elastomer umfasst, gewählt aus thermoplastischen Vulkanisaten (TPV), vernetzten Copolyestern (COPE) und deren Mischungen, wobei die vernetzte Elastomerzusammensetzung bevorzugt ferner ein wärmehärtbares Harz, wie beispielsweise ein in dem wenigstens einen dritten thermoplastischen Elastomer dispergiertes Epoxidharz, umfasst, insbesondere sofern Letzteres ein oder mehrere COPE umfasst.

14. Einsatz (1, 10') nach Anspruch 12 oder 13, **dadurch gekennzeichnet, dass** der Einsatz über die Länge hohl ist und eine rohrförmige Geometrie aufweist, umfassend eine bevorzugt kompakte genannte erste Schicht (3, 12') und die zweite Außenschicht (4, 13').

15. Einsatz (10) nach Anspruch 12 oder 13, **dadurch gekennzeichnet, dass** der Einsatz über die Länge gefüllt ist und einen Zellenkern (11) mit geschlossenen Zellen aufweist, wobei eine genannte erste, bevorzugt kompakte, Zwischenschicht (12) den Kern umgibt, und die zweite Außenschicht (13) aufweist.

16. Nichtpneumatische montierte Baugruppe für ein Fahrzeug mit Rädern, insbesondere gewählt aus Fahrrädern, Motorrädern, Förderfahrzeugen, Rollstühlen für Behinderte und Gehhilfen, wobei die montierte Baugruppe ein Rad umfasst, einen nichtpneumatischen Reifen, der auf dem Rad montiert ist, der eine Lauffläche und zwei Absätze umfasst, die an zwei Rändern des Rades montiert sind, und einen selbsttragenden Stützeinsatz (1, 10, 10') des Reifens, der zwischen dem Rad und dem Reifen montiert ist und Letzteren permanent stützt, **dadurch gekennzeichnet, dass** der Einsatz der Beschreibung nach einem der Ansprüche 11 bis 15 entspricht.

## Claims

1. An elastomer composition for a self-supporting support insert (1, 10, 10') for a non-pneumatic tire of a vehicle wheel, the composition comprising predominantly by weight a blend of at least one first thermoplastic elastomer and of at least one second thermoplastic elastomer, **characterized in that** said at least one first thermoplastic elastomer is a copolyamide (COPA) and said at least one second thermoplastic elastomer is a styrenic thermoplastic elastomer (TPS), and **in that** the composition is not crosslinked.

2. The composition as claimed in claim 1, **characterized in that** said blend comprises said at least one first thermoplastic elastomer in a weight fraction of less than or equal to that of said at least one second thermoplastic elastomer in said blend.

3. The composition as claimed in claim 2, **characterized in that** the composition is free of thermoplastic polyurethane (TPU), the weight fractions in said blend of said at least one first thermoplastic elastomer and of said at least one second thermoplastic elastomer being respectively between 5% and 49% and between 95% and 51%.

4. The composition as claimed in one of the preceding claims, **characterized in that** said at least one second thermoplastic elastomer comprises one said TPS of linear block type and one said TPS of block type grafted by a compatibilizing agent.

5. The composition as claimed in claim 4, **characterized in that** said linear TPS and said grafted TPS are respectively present in said at least one second thermoplastic elastomer in weight fractions of between 40% and 60% and 60% and 40%, and are each selected independently from the group consisting of styrene-butadiene-styrene (SBS), styrene-isoprene-styrene (SIS), styrene-butylene-ethylene-styrene (SEBS) and styrene-ethylene-propylene-styrene (SEPS) block copolymers.

6. The composition as claimed in claim 5, **characterized in that** said linear TPS is an SEBS and said grafted TPS is an SEBS grafted by maleic anhydride constituting said compatibilizing agent.

7. The composition as claimed in one of the preceding claims, **characterized in that** the composition comprises:
- in a weight fraction of between 3% and 40%, said at least one first thermoplastic elastomer that comprises at least one polyether-block-amide (PEBA),
- in a weight fraction of between 65% and 40%, said at least one second thermoplastic elastomer that preferably comprises one said TPS of linear type and one said TPS of the type grafted by a compatibilizing agent, and
- in a weight fraction of between 20% and 32%, a plasticizer, preferably a paraffinic plasticizer.

8. The composition as claimed in one of the preceding claims, **characterized in that** the composition has a rebound resilience, measured according to the ISO 4662:2009 standard, which is greater than or equal to 70%, for example equal to 75%.

9. The composition as claimed in one of claims 1 to 8, **characterized in that** the composition is compact, being free of blowing agent.

10. The composition as claimed in one of claims 1 to 8, **characterized in that** the composition is cellular with closed cells, comprising a blowing agent in a weight fraction of between 1% and 20% preferably in the form of thermoplastic microspheres containing a blowing gas forming said blowing agent.

11. A self-supporting support insert (1, 10, 10') for a non-pneumatic tire of a vehicle wheel, the insert having a circumferential length and a radial thickness (e) rendering it suitable to be fitted between said wheel and said tire while permanently supporting the latter, the insert comprising, over said length, at least one first layer (3, 12, 12') having a radial thickness of greater than 2 mm, **characterized in that** said at least one first layer consists of a composition as claimed in one of the preceding claims.

12. The insert (1, 10, 10') as claimed in claim 11, **characterized in that** the insert has a substantially circular cross section delimited radially on the outside by a second outer layer (4, 13, 13') having a radial thickness (e₁, e'₁) of between 100 µm and 1 mm and consisting of a crosslinked elastomer composition.

13. The insert (1, 10, 10') as claimed in claim 12, **characterized in that** said crosslinked elastomer composition comprises predominantly by weight at least one third thermoplastic elastomer selected from thermoplastic vulcanizates (TPVs), crosslinked copolyesters (COPEs) and blends thereof, said crosslinked elastomer composition preferably comprising in addition a thermosetting resin such as an epoxy resin dispersed in said at least one third thermoplastic elastomer, especially in the case where the latter comprises one or more COPEs.

14. The insert (1, 10') as claimed in claim 12 or 13, **characterized in that** the insert is hollow over said length and has a tubular geometry comprising one said first layer (3, 12') which is preferably compact, and said second outer layer (4, 13').

15. The insert (10) as claimed in claim 12 or 13, **characterized in that** the insert is solid over said length and has a cellular core (11) with closed cells, one said first intermediate layer (12) which is preferably compact surrounding said core, and said second outer layer (13).

16. A non-pneumatic fitted assembly for a wheeled vehicle, in particular selected from bicycles, motorcycles, handling vehicles, wheelchairs and rollators, the fitted assembly comprising a wheel, a non-pneumatic tire fitted on the wheel that comprises a tread and two beads fitted against two edges of the wheel, and a self-supporting support insert (1, 10, 10') for the tire that is fitted between the wheel and the tire while permanently supporting the latter, **characterized in that** said insert is as defined in one of claims 11 to 15.
